# EUROPEAN PATENT SPECIFICATION

(11) **EP 4 336 492 B1**
(45) Date of publication and mention of the grant of the patent: **29.10.2025**
(21) Application number: 23195870.3
(22) Date of filing: 07.09.2023
(51) Int. Cl.: G10L 15/22, G10L 15/18, G06F 3/16, G06F 40/30, G10L 15/30

(54) **LOCALIZED VOICE RECOGNITION ASSISTANT**
ASSISTENT FÜR LOKALISIERTE SPRACHERKENNUNG
ASSISTANT DE RECONNAISSANCE VOCALE LOCALISÉE

(30) Priority: 07.09.2022 IN 202241051079
(43) Date of publication of application: 13.03.2024
(73) Proprietor: Harman International Industries, Incorporated, Stamford, CT 06901 (US)
(72) Inventor: SAHOO, Sarada Prasad, Stamford, 06901 (US)
(74) Representative: Rummler, Felix

(56) References cited:
- US-A1- 2019 206 388
- US-A1- 2021 248 998

## Description

### BACKGROUND

### Field of the Various Embodiments

Embodiments disclosed herein relate to digital assistants and, in particular, to localized voice recognition assistants.

### Description of the Related Art

Various digital systems include digital assistants that assist users to perform tasks. For example, various vehicles include a digital assistant that communicates with subsystems such as an advanced driver assistance system (ADAS), an infotainment system, a navigation system, and so forth, to assist users of a vehicle. In some vehicles, the digital assistant responds to various types of user inputs to determine the particular command the user is initiating. Digital voice assistants (DVAs) include tools to enable digital speech recognition and digital speech generation, providing a voice interface that enables a user to provide conversational inputs to the digital voice assistant as an input to command that a specific action be taken. The interface enables the digital voice assistant to "listen" to an auditory speech input from a user and respond with a corresponding action.

One drawback of using digital voice assistants in vehicles, however, is that such digital voice assistants require connectivity to an external service to function. A digital voice assistant responds to an auditory speech input by processing the speech and transmitting the speech or a textual representation of the speech to a backend digital assistant service to process the input and determine the corresponding action (e.g., a directive mapped to a specific intent). As a result, the digital voice assistant cannot respond to the speech input of a user when the vehicle is not connected to the digital backend service. Other conventional digital assistants, such as touch-based digital assistants, have limited capabilities, as the conventional digital assistants only respond to limited types of user inputs and do not respond to speech inputs provided by the user.

As the foregoing illustrates, there is a need in the art for more effective techniques for digital voice assistants associated with the operation of a vehicle.

US 2019/206388 A1 discloses methods, systems, apparatus, for a user device to learn offline voice actions.

US 2021/248998 A1 discloses techniques, for implementing an assistant client device for controlling smart low latency devices, to provide computational efficiencies on the client or the server side or a reduction of network communications.

### SUMMARY

Various embodiments disclose a computer-implemented method comprises receiving an auditory speech signal generated by a user, converting the auditory speech signal into a text segment, comparing the text segment to a set of stored intents, where each stored intent specifies one or more actions for a component of a vehicle to perform, and upon determining that the text segment corresponds to a first intent in the set of stored intents, retrieving the one or more actions associated with the first intent, and causing one or more corresponding components of the vehicle to perform actions specified by the one or more actions.

At least one technical advantage of the disclosed techniques relative to the prior art is that, with the disclosed techniques, users can effectively provide speech inputs to cause vehicle components to execute commands without an external service processing the speech input, greatly improving the in-vehicle experience for users of the vehicle. In particular, by processing the speech of a user and executing a set of in-vehicle commands, the digital assistant application responds to user commands in situations where an external digital assistant service is not available to the vehicle. Further, processing speech inputs and executing a subset of vehicle actions enables the vehicle to execute a number of in-vehicle actions faster than transmitting the speech inputs to an external service for processing. In addition, by queuing representations of speech inputs that the digital assistant application cannot process or execute in-vehicle, the digital assistant application relieves users of a vehicle of physical and mental strain associated with having to repeat a speech input one or more times until the external speech processing service becomes available. These technical advantages provide one or more technological advancements over prior art approaches.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a digital assistant system according to one or more embodiments;
Figure 2 illustrates a technique for processing a speech input and responding to a local intent or a different type of intent, according to various embodiments;
Figure 3 sets forth a flow chart of method steps for executing an action based on a speech provided by a user, according to various embodiments; and
Figure 4 sets forth a flow chart of method steps for responding to a command received from a remote service, according to various embodiments.

### DETAILED DESCRIPTION

In the following description, numerous specific details are set forth to provide a more thorough understanding of the various embodiments. However, it will be apparent to one of skilled in the art that the inventive concepts may be practiced without one or more of these specific details.

### Overview

Embodiments disclosed herein include a digital assistant system that includes a digital assistant application. A processing unit included in the digital assistant system operates a digital assistant application that includes a local voice recognition application. The local voice recognition application receives an auditory speech signal corresponding to a phrase spoken by the user. The local voice recognition application converts the auditory speech signal into a text input. The local voice recognition application compares the text input to a set of local intents, where each local intent identifies one or more actions that are to be performed. Upon matching the text input to a local intent, the local voice recognition application, based on actions specified in the intent, causes one or more vehicle components to perform a set of in-vehicle actions. When the local voice recognition application determines that the text input does not match any local intent, the local recognition application attempts to connect to a remote service and transmit the text input. When the local recognition application determines that the vehicle is not connected to the remote service, the local voice recognition application queues the text input for later transmission to the remote service. When the local voice recognition application determines that the vehicle has established a network connection to the remote service, the local voice recognition application transmits the text input stored in the queue to the remote service. The text input is operable by the remote service to identify an intent for the text input and generate a corresponding set of commands associated with the intent. The remote service transmits the commands to devices that are to perform the action. The devices include one or more devices external to the vehicle and/or one or more devices within the vehicle. When the devices are within the vehicle, the local voice recognition application receives the commands from the remote service and forwards the commands to the devices within the vehicle.

### System Overview

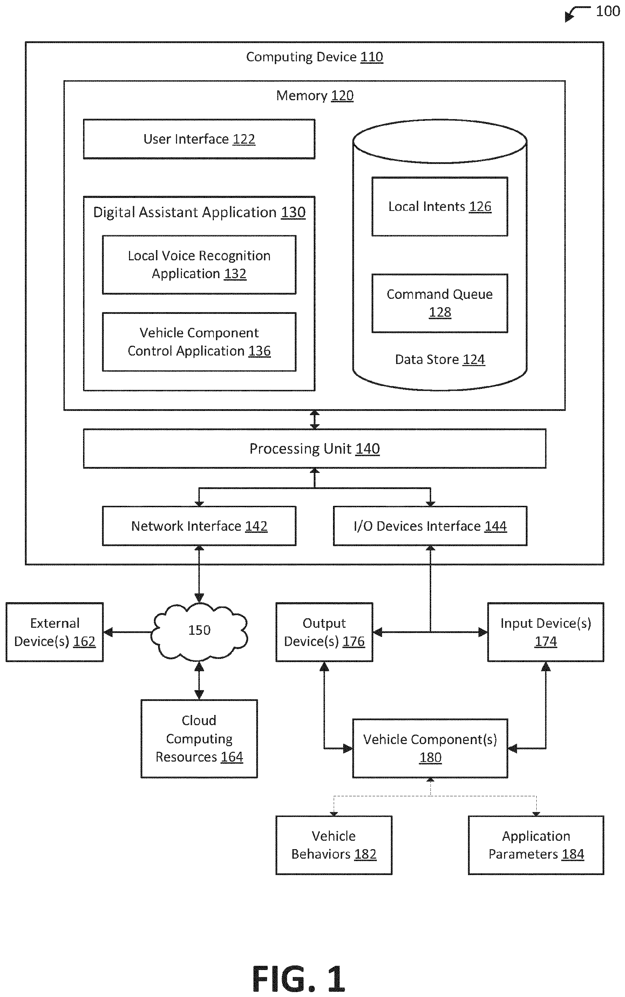

Figure 1 illustrates a digital assistant system 100 according to one or more embodiments. As shown, the digital assistant system 100 includes, without limitation, a computing device 110, a network 150, one or more external devices 162, cloud computing resources 164, input device(s) 174, output device(s) 176, and vehicle component(s) 180. The computing device 110 includes, without limitation, a memory 120, a processing unit 140, a network interface 142, and an input/output (I/O) devices interface 144. The memory 120 includes, without limitation, a user interface 122, a data store 124, and a digital assistant application 130. The digital assistant application 130 includes, without limitation, a local voice recognition application 132 and a vehicle component control application 136. The data store 124 includes, without limitation, local intents 126 (e.g., 126(1), 126 (2), etc.) and a command queue 128.

For explanatory purposes, multiple instances of like objects are denoted with reference numbers identifying the object and additional number in parentheses identifying the instance where needed. Further, the digital assistant system 100 includes multiple instances of elements, even when not shown. For example, the digital assistant system 100 can include multiple local intents 126 (e.g., 126(1), 126(2), 126(3), etc.), external devices 162 (e.g., 162(1), 162(2), 162(3), etc.), input devices 174 (e.g., 174(1), 174(2), 174(3), etc.), and/or output devices 176 (e.g., 176(1), 176(2), 176(3), etc.), and still be within the scope of the disclosed embodiments.

In operation, the computing device 110 executes the digital assistant application 130 in order to generate one or more commands in response to user inputs. In various embodiments, the local voice recognition application 132 receives an auditory speech signal provided by the user and converts the auditory speech signal into a text segment. The digital assistant application 130 determines that the text segment is associated with an intent, where the intent identifies one or more devices (e.g., one or more vehicle components 180, one or more external devices 162, etc.) that are to perform a set of one or more actions (e.g., vehicle behaviors 182, application parameters 184, etc.). The local voice recognition application 132 compares the text segment to one or more local intents 126, where each local intent 126 maps a context to a set of in-vehicle actions that are to be performed. When the local voice recognition application 132 identifies a matching local intent 126, the local voice recognition application 132 retrieves the corresponding actions and generates one or more commands based on the actions and the contents of the text segment. The local voice recognition application 132 then transmits the one or more commands to the vehicle component control application 136, where the vehicle component control application 136 transmits the one or more commands to the applicable vehicle components 180. The applicable vehicle components 180 operate specific electronic and/or mechanical components (not shown) and/or local applications (not shown) for execution.

When the local voice recognition application 132 does not identify a local intent 126 matching the text segment, the local voice recognition application 132 determines whether the cloud computing resources 164 are available to receive the text segment via the network 150. When the local voice recognition application 132 determines that a network connection is established with the cloud computing resources 164 are available, the local voice recognition application 132 transmits the text segment to the cloud computing resources 164 for further processing. When the local voice recognition application 132 determines that a network connection cannot be established with the cloud computing resources 164, the local voice recognition application 132 adds the text segment to the command queue 128. Alternatively, in some embodiments, the local voice recognition application 132 prompts the user to confirm adding the text segment to the command queue 128. When the computing device 110 later establishes a network connection to the cloud computing resources 164, the local voice recognition application 132 transmits one or more of the text segments that are stored in the command queue 128 to the cloud computing resources 164. The cloud computing resources 164 process each of the received text segments and generates commands for one or more devices (e.g., one or more vehicle components 180, one or more external devices 162, etc.), then transmits the commands to the applicable devices for execution.

In various embodiments, the computing device 110 is a device that includes one or more processing units 140, such as a system-on-a-chip (SoC). In various embodiments, the computing device 110 is a mobile computing device, such as a tablet computer, mobile phone, media player, and so forth that wirelessly connects to other devices in the vehicle. In some embodiments, the computing device 110 is a head unit or part of a head unit included in a vehicle system. In some embodiments, the computing device 110 is split among multiple physical devices in one or more locations. For example, the interface can be included in a mobile device, and one or more other devices can perform one or more aspects of the disclosed techniques, such as speech analysis, intent determination, command generation, and so forth. Additionally or alternatively, the computing device 110 is a detachable device that is mounted in a portion of a vehicle as part of an individual console. Generally, the computing device 110 is configured to coordinate the overall operation of the digital assistant system 100. The embodiments disclosed herein contemplate any technically feasible system configured to implement the functionality of the digital assistant system 100 via the computing device 110. The functionality and techniques of the digital assistant system 100 are also applicable to other types of vehicles, including consumer vehicles, commercial truck, airplanes, helicopters, spaceships, boats, submarines, and so forth.

The processing unit 140 can include one or more central processing units (CPUs), digital signal processing units (DSPs), microprocessors, application-specific integrated circuits (ASICs), neural processing units (NPUs), graphics processing units (GPUs), field-programmable gate arrays (FPGAs), and so forth. The processing unit 140 generally includes a programmable processor that executes program instructions to manipulate input data and generate outputs. In some embodiments, the processing unit 140 includes any number of processing cores, memories, and other modules for facilitating program execution. For example, the processing unit 140 could receive input from a user via the input devices 174 and generate pixels for display on an output device 176 (e.g., a display device). In some embodiments, the processing unit 140 is configured to execute the digital assistant application 130 in order to process auditory speech signals provided by the user via an input device 174 (e.g., a microphone) to determine an intent, generate one or more commands based on the intent, and/or store the intent in the command queue 128. Additionally or alternatively, the processing unit 140 is configured to execute the digital assistant application 130 in order to monitor a set of vehicle conditions and cause one or more vehicle components to execute a set of actions (e.g., vehicle behaviors, change to application parameters, etc.) based on the generated one or more commands.

The memory 120 includes a memory module or collection of memory modules. The memory 120 generally comprises storage chips such as random-access memory (RAM) chips that store application programs and data for processing by the processing unit 140. In various embodiments, the memory 120 includes non-volatile memory, such as optical drives, magnetic drives, flash drives, or other storage. In some embodiments, separate data stores, such as an external data store connected directly to the computing device 110 and/or connected via the network 150 ("cloud storage") are used by the digital assistant application 130 to store information. The user interface 122 and/or the digital assistant application 130 within the memory 120 is executed by the processing unit 140 in order to implement the overall functionality of the computing device 110 and, thus, coordinate the operation of the digital assistant system 100.

In various embodiments, the digital assistant application 130 implements one or more of the local voice recognition application 132 and/or the vehicle component control application 136 to process user inputs via the input device 174 and cause one or more devices to perform actions based on the inputs. In various embodiments, the digital assistant application 130 uses the local voice recognition application 132 and/or the vehicle component control application 136 to respond to distinct types of user inputs and/or distinct types of device actions based on whether the computing device 110 is connected to the cloud computing resources 164.

In various embodiments, the digital assistant application 130 uses one or more communications channels and/or connections to transmit data to other devices. For example, the digital assistant application 130 can transmit commands to the vehicle components 180 through a controller area network (CAN) bus, a desktop bus ("D-Bus"), a serial bus, and/or other connection devices connecting one or more of the vehicle components 180. In some embodiments, the digital assistant application 130 can use one or more message types (e.g. on-board diagnostics (OBD)-II, Enhanced OBD, direct memory reads (DMRs), Society of Automotive Engineers (SAE) J1939 messages, etc.) to transmit messages with the vehicle components 180. Additionally or alternatively, in some embodiments, the digital assistant application 130 transmits messages including a text segment and/or a command via the network 150 using a secure connection. For example, the digital assistant application 130 can establish a WebSocket connection with the cloud computing resources 164 before transmitting and/or receiving messages.

The local voice recognition application 132 processes an auditory speech signal and determines actions corresponding to the auditory speech signal. In various embodiments, the local voice recognition application 132 determines whether a text segment representation of the auditory speech signal matches a local intent 126 stored locally in the data store 124.

The one or more local intents 126 represent a "lightweight" subset of actions that the digital assistant application 130 is able to process from a speech input without assistance from the cloud computing resources 164. Each local intent 126 is an in-vehicle intent that specifies one or more actions that vehicle components 180 are to execute. In some embodiments, the local intent 126 maps a specific context (e.g., a trigger phrase and/or phrases with a specific semantic meaning) to a set of one or more actions that are performed by the vehicle components 180. For example, a local intent 126(1) can map a phrase, "play the next track," to an action specifying that an entertainment subsystem operating a media application transition to the next track in a playlist.

When the local voice recognition application 132 determines that the text segment matches the local intent 126, the local voice recognition application 132 retrieves the corresponding actions from the local intent 126. In some embodiments, the local voice recognition application 132 updates the action using information included in the text segment to fill in portions of the retrieved action. Upon updating the action with information from the text segment, the local voice recognition application 132 causes the applicable vehicle components 180 to perform the specified actions.

In various embodiments, when the local voice recognition application 132 determines that the text segment does not match any of the local intents 126, the local voice recognition application 132 determines whether the computing device 110 is connected to the cloud computing resources 164. When the local voice recognition application 132 determines that the computing device 110 is connected to the cloud computing resources 164, the local voice recognition application 132 transmits the text segment to the cloud computing resources 164 for further processing. Otherwise, the local voice recognition application 132 queues the text segment by adding the text segment to the command queue 128. In some embodiments, the local voice recognition application 132 automatically adds the text segment to the command queue 128 in response to determining that (i) the text segment does not match any of the local intents 126 and (ii) that the computing device 110 is not connected to the cloud computing resources 164. Alternatively, the local voice recognition application 132 prompts the user for confirmation before adding the intent to the command queue 128 and discards the intent when the user indicates that the intent should not be queued. When a network connection with the cloud computing resources 164 is later restored, the local voice recognition application 132 forwards the intents in the command queue 128 to the cloud computing resources 164 for processing.

The vehicle component control application 136 receives various inputs and transmits commands for various vehicle components 180 and/or devices. In various embodiments, the vehicle component control application 136 receives inputs, such as non-auditory user inputs, telemetry data, and/or other commands generated by other devices (e.g., commands generated by the local voice recognition application 132) and transmits commands to the applicable devices to execute the commands. In various embodiments, the vehicle component control application 136 can generate commands based on a received input. For example, the vehicle component control application 136 can receive a non-auditory input and generate a command for a specific vehicle component 180. For example, upon receiving an input to raise all vehicle windows, the vehicle component control application 136 generates one or more commands in the applicable format to cause the window control system to close any window that was open. Additionally or alternatively, the vehicle component control application 136 communicates using one or more communications interfaces (e.g., device APIs and/or SDKs, device firmware and/or firmware interfaces) to transmit messages to specific vehicle devices. In such instances, the vehicle component control application 136 can convert a command into specific format that is recognizable by the receiving vehicle component 180.

In some embodiments, the vehicle component control application 136 is a client that connects to a specific cloud computing resource 164. For example, the vehicle component control application 136 can be a client of a connect vehicle service platform (e.g., Harman Ignite^{™}) that connects to a set of remote microservices and cloud applications. For example, the vehicle component control application 136 can respond to a set of trigger conditions (e.g., approaching the home of the user at a specific time of day) by generating temperature control commands for a smart thermostat in the home to change the temperature. The vehicle component control application 136 transmits the temperature control command to the cloud computing resources 164, which forward the temperature control command to the applicable external device 162 (e.g., the thermostat) to execute an action corresponding to the temperature control command.

The user interface 122 includes one or more audio, visual, and/or other interfaces that enable a user to provide input(s), such as the auditory speech signals, approval of queuing requests, and so forth, and receive outputs provided by the computing device 110. In some embodiments, the user interface 122 receives inputs indicating remotely stored intents (e.g., stored in an external data store) to download and store as local intents 126. Additionally or alternatively, the user interface 122 provides an audio output providing notifications about the state of provided inputs. For example, the user interface 122 can provide output audio indicating that a specific action has been performed. In another example, the user interface 122 can provide an audio signal mimicking a human voice providing a notification that the computing device 110 could not establish a network connection to the cloud computing resources 164 and prompting the user to confirm queuing a text segment representing the input that the user provided. In some embodiments, the user interface 122 displays text corresponding to the local intents 126, one or more text segments stored in the command queue 128, and/or notifications of errors. In some embodiments, user interface 122 takes any feasible form for providing the functions described herein, such as one or more buttons, toggles, sliders, dials, knobs, etc., or as a graphical user interface (GUI). In various embodiments, the user interface 122 is provided through any one or more components of digital assistant system 100. In one embodiment, user interface 122 is provided by a separate computing device that is communicatively coupled with the computing device 110, such as through an application running on a user's mobile or wearable computing device. Additionally or alternatively, in some embodiments, the user interface122 is included in a different vehicle component 180 and is connected to the digital assistant application 130 over a CAN bus. For example, an infotainment system (e.g., included in an entertainment subsystem of a vehicle head unit) provides the user interface 122 via a display and/or a voice agent.

The data store 124 stores values and/or other data retrieved by the processing unit 140 to coordinate the operation of the digital assistant system 100. In various embodiments, the processing unit 140 is configured to store values in the data store 124 and/or retrieve values stored in the data store 124. For example, the data store 124 could store, audio content (e.g., audio clips, auditory speech signals, etc.), one or more local intents 126, and/or the command queue 128.

In some embodiments, the computing device 110 communicates with other devices, such as the input device(s) 174, the output device(s) 176, and/or the vehicle components 180 using the input/output (I/O) devices interface 144. In such instances, the I/O devices interface 144 can include any number of different I/O adapters or interfaces used to provide the functions described herein. For example, the I/O devices interface 144 could include wired and/or wireless connections, and can use various formats or protocols. In another example, the computing device 110, through the I/O devices interface 144, could receive auditory signals from the input device(s) 174 and provide output signals to the output device(s) 176 to produce outputs in various types (e.g., visual indication, soundwaves, haptic sensations, etc.).

In some embodiments, the computing device 110 communicates with other devices, such as the external devices 162 and/or the cloud computing resources 164 using the network interface 142 and the network 150. In some embodiments, other types of networked computing devices (not shown) connect to the computing device 110 via the network interface 142. Examples of networked computing devices include a server, a desktop computer, a mobile computing device, such as a smartphone or tablet computer, and/or a worn device, such as a wristwatch or headphones or a head-mounted display device. In some embodiments, the networked computing devices are used as the input device(s) 174 and/or the output device(s) 176.

The input device(s) 174 are devices capable of receiving one or more inputs. In various embodiments, the input device(s) 174 includes one or more audio input devices, such as a microphone, a set of microphones, and/or a microphone array. In various embodiments, the microphone is directional (e.g., user-facing microphone, beamforming microphone array, etc.) and acquires auditory data from a specific person, such as a driver. The sound data is processed by the digital assistant system 100 and/or another audio processing device using various audio processing techniques. In some embodiments, the input device(s) 174 include other devices capable of receiving input, such as a keyboard, a mouse, a touch-sensitive screen, and/or other input devices for providing input data to the computing device 110. These inputs could include gestures, such as various movements or orientations of the hands, arms, eyes, or other parts of the body that are received via a camera. Additionally or alternatively, the input device(s) 174 includes multiple types of sensors, including vehicle sensors (e.g., outward-facing cameras, accelerometers, etc.), occupant-facing sensors (e.g., cameras, microphones, motion sensors, etc.), and/or compartment non-occupant facing sensors (e.g., pressure sensors, temperature sensors, etc.). In various embodiments, the input device(s) 174 provide a combination of sensor data that describes the context of the vehicle and the occupants that are present within the vehicle. For example, the sensors can provide a set of values associated with the users of the vehicle (e.g., positions of users, noise level, etc.).

The output device(s) 176 include devices capable of providing output, such as a display screen, loudspeakers, haptic output devices, and the like. For example, the output device 176 could be headphones, ear buds, a speaker system (e.g., one or more loudspeakers, amplifier, etc.), or any other device that generates an acoustic field. In another example, the output device 176 could include haptic output devices, such as ultrasound transducers, air vortex generators, air bladders, and/or any type of device configured to generate haptic output. In various embodiments, various input device(s) 174 and/or output device(s) 176 are incorporated into computing device 110 or are external to computing device 110.

In various embodiments, the output device(s) 176 are implemented using any number of different conventional form factors, such as discrete loudspeaker devices, around-the-ear (circumaural), on-ear (supraaural), or in-ear headphones, hearing aids, wired or wireless headsets and/or personal speakers, body-worn (head, shoulder, arm, etc.) speaker devices, body-worn close-range directional speakers or speaker arrays, body-worn ultrasonic speaker arrays, and so forth. In some embodiments, output device(s) 176 include other forms of outputs, such as display devices that provide visual outputs. In some embodiments, output device(s) 176 are worn by the user, or disposed separately at a fixed location, or movable.

The vehicle components 180 include various components to control the operation of the vehicle. For example, vehicle components can include controllers to operate one or more windows, windshield wipers, locks, etc. In some embodiments, the vehicle components include various vehicle subsystems and/or applications operated by the various electronic, electrical, and/or mechanical vehicle subsystems, such as an ADAS and dynamic driver assistance programs, the air conditioning subsystem, navigation subsystem, entertainment subsystem and media applications, in-vehicle infotainment systems, device control systems (e.g., controls for windows, seats, mirrors, etc.) and so forth. Each of the vehicle components 180 is configured to receive commands and generate signals to cause a specific action (e.g., open the driver-side window) to be performed. In some embodiments, the vehicle components 180 includes one or more output devices 176. For example, the entertainment subsystem can include one or more loudspeakers. In such instances, the vehicle component 180 drives the specific output devices 176 in response to a received command.

In various embodiments, a given vehicle component 180 responds to a received command by performing one or more vehicle behaviors 182 and/or changing one or more application parameters 184. For example, a navigation subsystem can respond to a command by generating an application parameter that display notification messages and/or alerts. In another example, a climate control system can respond to a command by modifying a target temperature. In various embodiments, each of the local intents 126 can specify one or more of the vehicle behaviors 182 a given vehicle component 180 performs and/or the application parameters 184 that a given vehicle component 180 changes.

The network 150 includes a plurality of network communications systems, such as routers and switches, configured to facilitate data communication between the computing device 110 and the external devices (e.g., the external device(s) 162 and/or the cloud computing resources 164). Persons skilled in the art will recognize that many technically feasible techniques exist for building the network 150, including technologies practiced in deploying an Internet communications network. For example, the network 150 can include a wide-area network (WAN), a local-area network (LAN), a wireless (Wi-Fi) network, and/or a cellular network among others.

The external devices 162 are one or more devices external to the vehicle containing the computing device 110 that respond to commands generated by the vehicle. In various embodiments, the external devices 162 are one or more Internet-of-Things (IoT) devices, "smart" devices, sensor devices, and other types of devices (e.g., mobile devices, wearable devices, desktop devices, etc.) that can receive and respond to remote commands. In various embodiments, one or more of the external devices 162 receive commands generated by the computing device 110 and/or the cloud computing resources 164.

The cloud computing resources 164 include one or more remote devices, resources, and/or services that communicate with the computing device 110 and process data. For example, the cloud computing resources 164 can include an event-driven architecture (e.g. Amazon Web Service Lambda^{™}), a connect vehicle service platform (e.g., Harman Ignite^{™}), and/or other services that communicate with the computing device 110, the external device(s) 162, and/or the cloud computing resources 164.

In various embodiments, the cloud computing resources 164 includes a digital assistant backend including one or more remote devices, resources, and/or services that communicate with the computing device 110 to process data associated with the digital assistant application 130. For example, the cloud computing resources 164 can include a voice assistant skills kit that recognizes and/or processes a specific input (e.g., a text segment including a voice command) as an event and generates a command (e.g., a directive for an action corresponding to the capabilities of the applicable external devices 162 and/or the applicable vehicle components 180). In some embodiments, the cloud computing resources 164 receives the text input generated by the digital assistant application 130 and generates one or more corresponding commands. For example, when the user provides the input, "tell me the current score of the Tigers-Red Sox game," the digital assistant application 130 provides a message requesting information that includes the text segment. The digital assistant backend included in the cloud computing resources 164 processes the message and, based on the contents of the text segment, generates a command for an information-retrieval service to retrieve information for specific teams and a specific time from a news resource.

### Localized Voice Recognition of In-Vehicle Commands

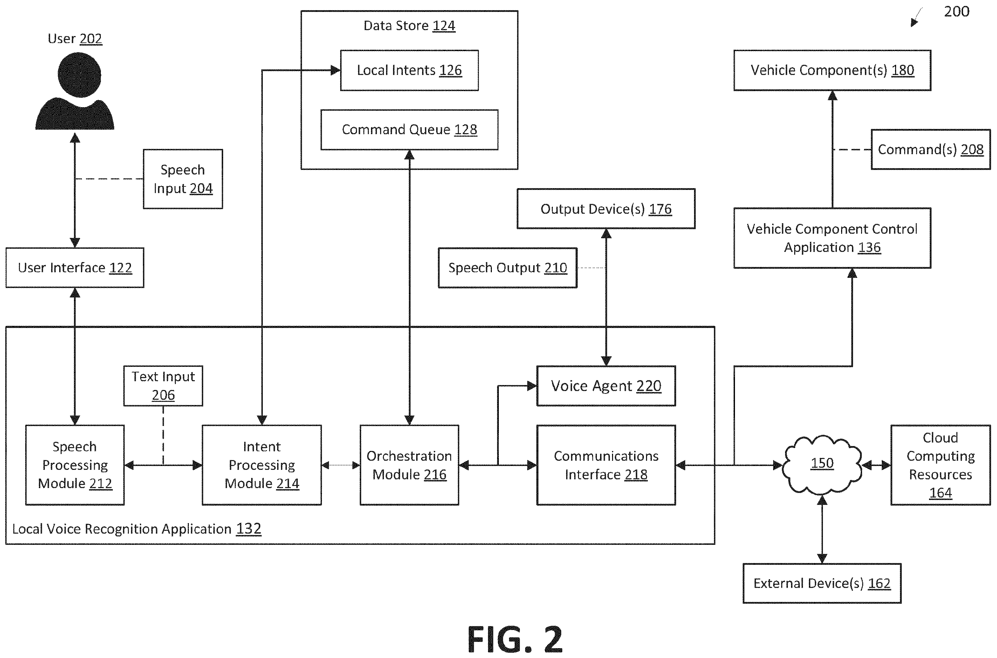

Figure 2 illustrates a technique for processing a speech input 204 and responding to a local intent 126 or a different type of intent, according to various embodiments. As shown, the digital assistant system 200 includes, without limitation, the user interface 122, the local voice recognition application 132, the vehicle component control application 136, the data store 124, the output device(s) 176, the vehicle components 180, the cloud computing resources 164, and the external devices 162. The local voice recognition application 132 includes, without limitation, a text input 206, a speech processing module 212, an intent processing module 214, an orchestration module 216, a communications interface 218, and a voice agent 220.

**In** operation, the local voice recognition application 132 responds to the speech input 204 provided by the user 202 by specifying an action that is used to generate the command 208 that drives a vehicle component 180 to perform a certain action, such as a specific vehicle behavior 182 or an application parameter 184 change. When the local voice recognition application 132 identifies a matching local intent 126, the local voice recognition application 132 generates an applicable action that includes information from the speech input 204 and forwards the information to the vehicle component control application 136. The vehicle component control application 136 generates a command 208 corresponding to the action and transmits the command to the applicable vehicle component. When the local voice recognition application 132 does not identify a matching local intent 126, the local voice recognition application 132 determines whether a network connection can be established with the cloud computing resources 164. When the network connection can be established with the cloud computing resources 164, the local voice recognition application 132 transmits the text input 206 to the cloud computing resources 164. When the network connection cannot be established, the local voice recognition application 132 stores the text input 206 in the command queue until the network connection can later be established. In some embodiments, the local voice recognition application 132 receives multiple speech inputs 204 (e.g., speech input 204(1), speech input 204(2), etc.). In such instances, the local voice recognition application 132 processes each speech input 204 and responds to each speech input 204 in the order that the speech input 204 was received.

In various embodiments, the speech processing module 212 converts the speech input 204 into the text input 206. In some embodiments, the speech processing module 212 receives the speech input 204 provided by the user 202 via the user interface 122. In such instances, the speech processing module 212 parses the speech input 204 and performs various speech-to-text techniques and generate the text input 206. In various embodiments, the text input 206 includes one or more elements that specify the intention of the user 202 to generate a command for a device to perform an action. For example, the text input 206 can include a context portion that includes a part of the speech input 204 triggering processing of the speech input 204 as being associated with the execution of the action (e.g., a key word or phrase, a set of conditions, etc.), and an action portion that includes information associated with actions that are to be performed.

In various embodiments, the speech processing module 212 performs various natural language processing (NLP) and natural language understanding (NLU) techniques, sentiment analysis, and/or speech analysis in order to identify phrases spoken by the user 202. In some embodiments, the speech processing module 212 receives the speech input 204 from the user 202 via the user interface 122. Alternatively, in some embodiments, another component of the vehicle (e.g., an infotainment system, an entertainment subsystem, etc.) or another device, (e.g., a connected speech processor) processes the speech input 204. Additionally or alternatively, the speech processing module 212 performs various speech-to-text techniques on the speech input 204 to identify and/or classify portions of the speech input 204 to applicable fields of the text input 206. In some embodiments, the speech processing module 212 is part of a lightweight system that processes a limited number of speech inputs that are tied to the local intents 126. For example, the speech processing module 212 can be programmed to identify a small set of key words or phrases, where each key word or phrase is associated with at least one of the local intents 126.

In various embodiments, the intent processing module 214 determines a semantic meaning of the information included in the text input 206. In some embodiments, the intent processing module 214 uses the semantic meaning and/or other information to map the text input 206 to a local intent 126. In some embodiments, intent processing module 214 performs sentiment analysis to determine an intent of a phrase and/or a meaning of a phrase included in the text input 206. In some embodiments, the intent processing module 214 employs various statistical methods, machine-learning (ML) methods, state machines, and/or various other data structures in order to identify deviations of phrases to pre-defined key words or phrases, and/or actions associated with the vehicle. In some embodiments, the intent processing module 214 substitutes specific values in the text input 206 based on the determined semantic meaning. For example, the intent processing module 214 can use NLU processes to determine that "turn up the bass" corresponds to specific actions, such as the entertainment subsystem increasing a bass level from a current level or setting the bass level to a specific level.

In various embodiments, the intent processing module 214 compares the text input 206 to one or more local intents 126 stored in the data store 124. Each of the one or more local intents 126 correspond to specific conditions and actions that can be performed by one or more vehicle components 180 without connecting to the cloud computing resources 164 . For example, the data store 124 can store fifty local intents 126 that correspond to the most-commonly requested in-vehicle actions (e.g., hands-free operation actions, local information retrieval, etc.) performed by the vehicle components 180. In such instances, the intent processing module 214 compares the text input 206 to portions of the local intents 126 to determine whether the text input 206 matches or otherwise corresponds to a local intent 126. For example, the user 202 can provide the speech, "tell me who's singing right now." The orchestration module 216 can receive a text input 206 and identify a local intent 126 with a matching form, where the given local intent 126(1) has the form of a mapping between a parsed representation of a context and action:
{IF "tell me" OR "who is" or "what is" AND "sing" or "play"}
{THEN retrieve <artist name> of <track>}

In response, the intent processing module 214 retrieves one or more actions specified in the local intent 126(1). In some embodiments, the intent processing module 214 updates the retrieved action with information from the text input 206 and transmits the updated action to the vehicle component control application 136 via the communications interface 218.

In various embodiments, the intent processing module 214 determines that the text input 206 does not have a corresponding local intent 126. In such instances, the intent processing module 214 transmits the text input 206 to the orchestration module 216 with an indication that the text input 206 was not matched to a local intent 126. In some embodiments, the orchestration module 216 stores the text input 206 in the command queue 128 and later transmits the text input 206 to the cloud computing resources 164 for further processing once a network connection is established. In some embodiments, the orchestration module 216 automatically stores the text input 206 in the command queue 128 when the local voice recognition application 132 determines that there is no network connection established with the cloud computing resources 164. Alternatively, in some embodiments, the orchestration module 216 can generate speech output 210, such as a notification, and can provide the speech output 210 via the voice agent 220 notifying the user 202 that the requested action cannot occur due to failure to establish a connection with the cloud computing resources 164. In such instances, the orchestration module 216 prompts the user to confirm storage of the text input 206 in the command queue 128, or reject the storage of the text input 206, where the orchestration module 216 responds by discarding the text input 206.

In various embodiments, the orchestration module 216 can generate one or more actions and/or one or more commands for a specific service that is to perform an action associated with the local intent 126. For example, when causing one or more vehicle components 180 to perform a one or more actions, the orchestration module 216 retrieves one or more pre-defined actions from the local intent 126. In such instances, the orchestration module 216 updates the pre-defined actions with information included in the text input 206. For example, when the text input 206 includes specific information provided by the user 202 ("set the temperature to 72 degrees"), the orchestration module 216 updates a pre-defined action (e.g. { THEN set <target tempt> to <x>} by replacing <x> with the temperature specified by the user 202. The orchestration module 216 forwards the updated action to the vehicle component control application 136, where the vehicle component control application 136 identifies the applicable vehicle component 180 to perform the updated action and generate a command 208 in the applicable format to cause the applicable vehicle component 180 to operate in the specified manner.

In some embodiments, the orchestration module 216 receives the command from the intent processing module 214. In such instances, the orchestration module 216 forwards the received command to the applicable application (e.g., the vehicle component control application 136) for transmission to the applicable vehicle component 180 or remote device. Alternatively, in some embodiments, the orchestration module 216 identifies a specific vehicle component 180 (e.g., the entertainment subsystem) as the applicable device to perform the action and generates a command to cause the vehicle component 180 to perform the action. In such instances, the local voice recognition application 132 uses the communication interface 218 to include the command in a transmission to the vehicle component control application 136.

In various embodiments, the communications interface 218 includes one or more application programming interfaces (APIs), such as device-specific APIs, that the local voice recognition application 132 uses to generate messages in formats that other devices can recognize. For example, the communications interface 218 can include one or more digital assistant APIs and/or software development kit (SDK) tools. In such instances, the local voice recognition application 132 can use the applicable API or SDK tool to include the information provided by the orchestration module 216 in the applicable format. For example, the local voice recognition application 132 can use a Google Assistant^{™} and/or Alexa^{™} API to include the text input 206 in a message formatted to be recognized by a backend service for the corresponding platform. In various embodiments, the local voice recognition application 132 uses the communications interface 218 to process messages received from other devices. For example, the local voice recognition application 132 can use an Amazon Alexa^{™} SDK tool to extract information (e.g., requested information, vehicle commands, etc.) from an incoming message from the cloud computing resources 164 before transmitting the extracted information to the orchestration module 216 for forwarding within the vehicle.

### Response to Commands by Local Voice Recognition Application

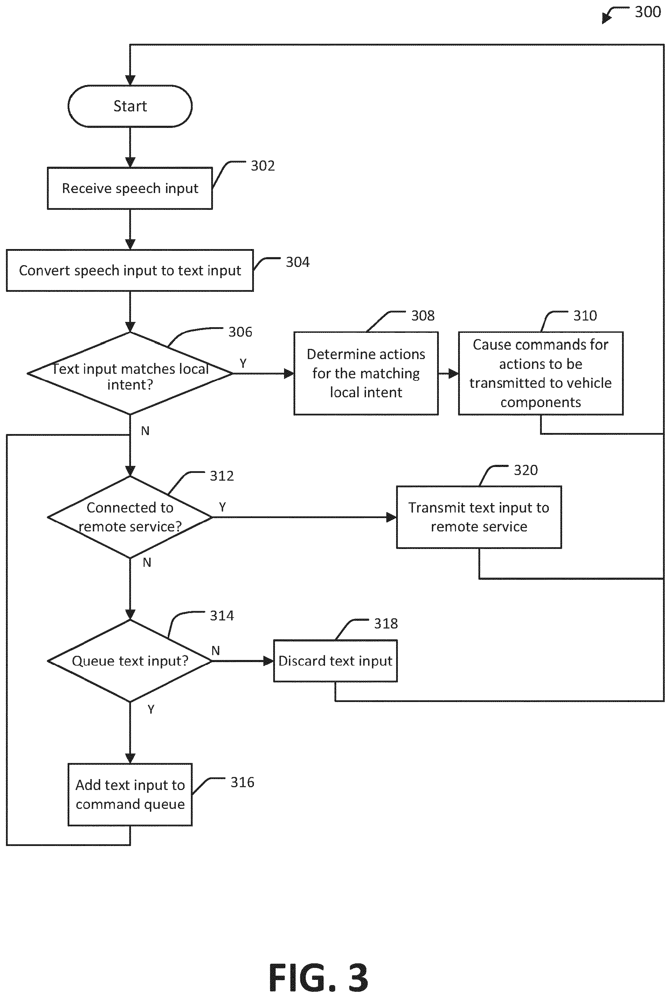

Figure 3 sets forth a flow chart of method steps for executing an action based on a speech provided by a user, according to various embodiments. Although the method steps are described with reference to the systems and embodiments of Figures 1-2, persons skilled in the art will understand that any system configured to implement the method steps, in any order, falls within the scope of the present disclosure.

As shown in Figure 3, the method 300 begins at step 302, where the local voice recognition application 132 receives a speech input. In various embodiments, a speech processing module 212 included in the local voice recognition application 132 receives a speech input 204 provided by the user 202 via a user interface 122.

At step 304, the local voice recognition application 132 converts the speech input 204 into a text input 206. In various embodiments, the speech processing module 212 parses the speech input 204 and performs various speech-to-text techniques to generate a text input 206 representing the speech input 204 provided by the user 202. In some embodiments, the speech processing module 212 is a lightweight speech processor that processes a limited library of phrases associated with the local intents 126. In such instances, the speech processing module 212 processes the speech input 204speech to identify a limited set of key words or phrases associated with actions that are to be performed by one or more vehicle components 180.

At step 306, the local voice recognition application 132 determines whether the text input matches a local intent. In various embodiments, an intent processing module 214 included in the local voice recognition application 132 compares the text input 206 provided by the speech processing module 212 to the set of local intents 126 stored in the data store 124. Each of the set of local intents 126 specify one or more specific actions that can be performed by one or more vehicle components 180 without connecting to devices or services external to the vehicle (e.g., external devices 162 and/or cloud computing resources 164). When the intent processing module 214 determines that the text input 206 matches a local intent 126, the local voice recognition application 132 proceeds to step 308. Otherwise, the local voice recognition application 132 determines that the text input 206 does not match any of the local intents 126 and proceeds to step 312.

At step 308, the local voice recognition application 132 determines actions for the matching local intent 126. In various embodiments, the orchestration module 216 receives the text input 206 and at least a portion of the matching local intent 126. In such instances, the orchestration module 216 generates an action that corresponds to the information included in the text input 206. For example, the intent processing module 214 identifies a specific local intent 126 corresponding to the text input 206. The intent processing module 214 retrieves one or more pre-defined actions included in the local intent 126 and transmits the one or more pre-defined actions and the text input 206 to the orchestration module 216. In such instances, the orchestration module 216 updates the one or more pre-defined actions with information included in the text input 206 to generate one or more updated actions.

At step 310, the local voice recognition application 132 causes commands for the one or more actions to be transmitted to the vehicle components. In various embodiments, the orchestration module 216 transmits the one or more updated actions to the vehicle component control application 136. The vehicle component control application 136 generates one or more corresponding commands for the one or more updated actions and transmits the one or more corresponding commands to the applicable vehicle components 180. Alternatively, in some embodiments, the orchestration module 216 generates one or more commands based on the one or more updated actions. In such instances, the orchestration module 216 forwards the one or more commands to the applicable vehicle component 180 via the vehicle component control application 136. Once the one or more commands are transmitted to the vehicle components 180, the local voice recognition application 132 returns to step 302 to receive subsequent speech inputs.

At step 312, the local voice recognition application 132 determines whether the vehicle is connected to a remote service. In various embodiments, the orchestration module 216 can receive the text input 206 from the intent processing module 214 upon the intent processing module 214 determining that no local intent 126 corresponds to the text input 206. Upon receiving the text input 206, the orchestration module 216 determines whether the vehicle is connected to a remote service, such as a digital assistant backend included in the cloud computing resources 164. When the orchestration module 216 determines that the vehicle is connected to a remote service, the orchestration module 216 proceeds to steps 320. Otherwise, the orchestration module 216 determines that the vehicle is not connected to a remote service and proceeds to step 314.

At step 314, the local voice recognition application 132 determines whether to queue the text input. In various embodiments, the orchestration module 216 responds to determining that the vehicle is not connected to the remote service by determining whether to add the text input 206 to the command queue 128. In some embodiments, the orchestration module 216 automatically queues the text input 206. In such instances, the orchestration module 216 automatically proceeds to step 316. Alternatively, in some embodiments, the orchestration module 216 prompts the user 202 to confirm whether to store the text input 206 in the command queue 128. For example, the orchestration module 216 can notify the user 202 that the text input 206 cannot be currently executed and prompt the user 202 to confirm storage of the text input 206 for later processing. When the user 202 confirms queuing the text input 206, the orchestration module 216 proceeds to step 316. Otherwise, the orchestration module 216 receives an indication from the user 202 rejecting the storage of the text input 206. In such instances, the orchestration module 216 proceeds to step 318, where the orchestration module 216 discards the text input 206.

At step 316, the local voice recognition application 132 adds the text input to the command queue. In some embodiments, the orchestration module 216 adds the text input 206 to the command queue 128; when the text input 206 is added to the command queue 128, the orchestration module 216 later retrieves the text input 206 from the command queue 128 and forwards the text input 206 to the remote service upon determining that the vehicle has established a network connection to the remote service. In some embodiments, the orchestration module 216 stores the text input 206 in the command queue 128 for a specified period (e.g., 1 hour, resetting before shutdown, etc.). Alternatively, the orchestration module 216 can store the command queue 128 until connecting to the remote service. Once the text input 206 is stored in the command queue 128, the local voice recognition application 132 returns to step 302 to receive subsequent speech inputs.

At step 320, the local voice recognition application 132 transmits the text input 206 to the remote service. In some embodiments, the local voice recognition application 132 executes various security measures when transmitting the text input 206. For example, the local voice recognition application 132 can use the communications interface 218 to include the text input 206 in encrypted messages and transmit the encrypted messages over the network 150. Additionally or alternatively, the local voice recognition application 132 uses the communications interface 218 to establish a secure connection to the remote service. In such instances, the orchestration module 216 can cause the text input 206 to be transmitted to the remote service via the secure connection. In various embodiments, the text input 206 is operable by the remote service for further processing and transmission. For example, the digital assistant backend can generate one or more commands based on the text input 206 and can transmit the generated commands back to the orchestration module 216 (e.g., commands 208 for vehicle components 180 and/or information to be output as speech output 210) for use within the vehicle. Alternatively, the digital assistant backend transmits commands to one or more external devices 162 for execution. Once the text input is transmitted to the remote service, the local voice recognition application 132 returns to step 302 to receive subsequent speech inputs.

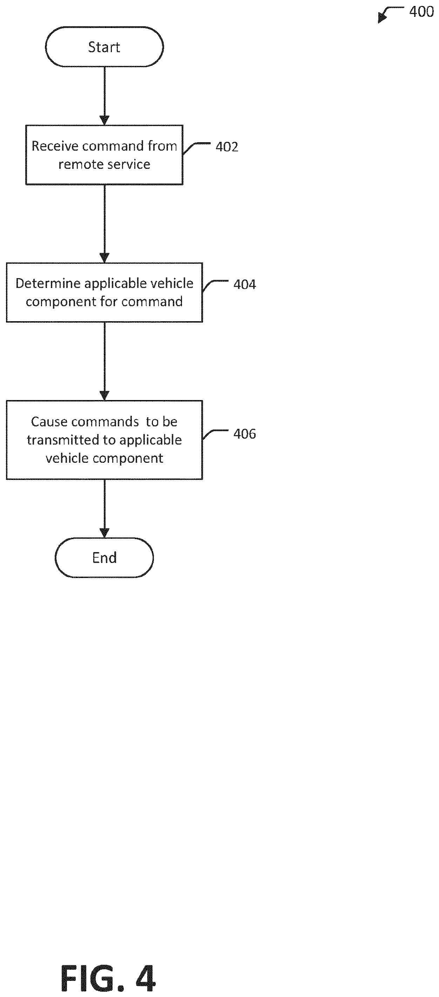

Figure 4 sets forth a flow chart of method steps for responding to a command received from a remote service, according to various embodiments. Although the method steps are described with reference to the systems and embodiments of Figures 1-2, persons skilled in the art will understand that any system configured to implement the method steps, in any order, falls within the scope of the present disclosure.

As shown in Figure 4, the method 400 begins at step 402, where the local voice recognition application 132 receives a command from a remote service. In various embodiments, the local voice recognition application 132 receives a command from a remote service, such as a digital assistant backend included in the cloud computing resources 164. In some embodiments, the communications interface 218 receives a message from the digital assistant backend and extracts one or more commands from the message. The orchestration module 216 receives the one or more commands from the communications interface 218.

At step 404, the local voice recognition application 132 determines the applicable vehicle component 180 for the received command. In various embodiments, the orchestration module 216 determines the vehicle component 180 that is to execute the received command. In some embodiments, the command is a command for a vehicle component 180 to perform and action, such as remote starting the vehicle. Alternatively, in some embodiments, the command is a command to provide information to the user 202.

At step 406, the local voice recognition application 132 causes commands to be transmitted to the applicable vehicle component. In various embodiments, the orchestration module 216 transmits the received command to the applicable vehicle component via the communications interface 218 and/or the voice agent. For example, when the command is a command for a vehicle component 180 to perform an action, the orchestration module 216 transmits the command via the communications interface 218 to the vehicle component control application 136. The vehicle component control application 136 then forwards the received command the applicable vehicle components 180. Alternatively, in some embodiments, when the command is a command to provide information to the user. In such instances, the orchestration module 216 converts the information to a speech output 210 and provides the speech output 210 to the user 202 via the voice agent 220.

In sum, a digital assistant application converts input signals provided by a user into a text segment. In various embodiments, a local voice recognition application included in the digital assistant application uses one or more vehicle components to perform a subset of predefined in-vehicle actions based on the text input. The digital assistant application otherwise connects to a remote service to execute the action specified by the information in the text segment. When the digital assistant application determines that the vehicle is not connected to the remote service, the digital assistant application queues the text segment for later processing and execution upon connecting with the remote service.

When causing the one or more vehicle components to perform a predefined in-vehicle action, the local voice recognition application compares the text input to a stored set of local intents that store one or more actions that can be performed by one or more vehicle components without connecting to the remote service. When the local intent matches the text input, the local voice recognition application retrieves one or more actions associated with the local intent. The local voice recognition application updates the retrieved one or more actions with information from the text input and forwards the updated one or more actions to a vehicle command controller. The vehicle command controller generates commands corresponding to the one or more updated actions and transmits the commands to the applicable vehicle components.

At least one technical advantage of the disclosed techniques relative to the prior art is that, with the disclosed techniques, users can effectively provide speech inputs to cause vehicle components to execute commands without an external service processing the speech input or text input, greatly improving the in-vehicle experience for users of the vehicle. In particular, by processing the speech of a user and executing a set of in-vehicle commands, the digital assistant application responds to user commands in situations where an external digital assistant service is not available to the vehicle. Further, processing speech inputs and executing a subset of vehicle actions enables the vehicle to execute a number of in-vehicle actions faster than transmitting the speech inputs to an external service for processing. In addition, by queuing representations of speech inputs that the digital assistant application cannot process or execute in-vehicle, the digital assistant application relieves users of a vehicle of physical and mental strain associated with providing speech inputs multiple times based on whether the external speech processing service is available. These technical advantages provide one or more technological advancements over prior art approaches.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method (300) comprising:
receiving (302) an auditory speech signal generated by a user (202);
converting (304) the auditory speech signal into a text segment;
comparing (306) the text segment to a set of stored intents, wherein each stored intent specifies one or more actions for a component of a vehicle to perform; and
upon determining (308) that the text segment corresponds to a first intent in the set of stored intents:
retrieving the one or more actions associated with the first intent; and
causing (308) one or more corresponding components (180) of the vehicle to perform actions specified by the one or more actions;
**characterised in that** the computer-implemented method further comprises:
upon determining (312) that the text segment does not correspond to at least one stored intent in the set of stored intents and the vehicle does not have a network connection with a remote service, automatically adding (316) the text segment to a queue for a specified period;
wherein the text segment specifies at least one action for a device external to the vehicle to perform.

2. The computer-implemented method of claim 1, further comprising:
upon determining (312) that the vehicle has established the network connection with the remote service, transmitting (320) the text segment from the queue to the remote service.

3. The computer-implemented method (300) of claim 1, wherein the remote service comprises at least one of a backend digital assistant service, an event-driven architecture, or a vehicle services platform.

4. The computer-implemented method (300) of claim 1, further comprising:
upon determining that the text segment does not correspond to at least one stored intent in the set of stored intents and the vehicle does not have a network connection with a remote service: prompting the user to add the text segment to a queue; and
upon receiving a confirmation from the user, storing the text segment the queue, or
upon receiving a rejection from the user, discarding the text segment.

5. The computer-implemented method (300) of any one of claims 1-4, wherein causing one or more corresponding components of the vehicle to perform actions specified by the one or more actions comprises:
generating one or more commands based on the one or more actions; and
transmitting the one or more commands to the one or more corresponding components, wherein the one or more corresponding components perform the actions by executing the one or more commands.

6. The computer-implemented method (300) of any one of claims 1-5, further comprising:
receiving a second set of intents; and
adding the second set of intents to the set of stored intents to generate an updated set of stored intents.

7. The computer-implemented method (300) of any one of claims 1-6, wherein each action of the one or more actions identifies at least one of:
a vehicle behavior performed by a component of the vehicle, or
a change to an application parameter executed by a component of the vehicle.

8. One or more non-transitory computer-readable media storing instructions that, when executed by one or more processors, cause the one or more processors to perform the method of any one of claims 1-7.

9. A system (100) comprising:
a memory (120) storing a local voice recognition application; and
a processor (140) coupled to the memory that when executing the local voice recognition application (132) performs the steps of:
receiving (302) an auditory speech signal generated by a user (202);
converting (304) the auditory speech signal into a text segment;
comparing (306) the text segment to a set of stored intents, wherein each stored intent specifies one or more actions for a component (180) of a vehicle to perform; and
upon determining (308) that the text segment corresponds to a first intent in the set of stored intents:
retrieving the one or more actions associated with the first intent; and
causing one or more corresponding components of the vehicle to perform actions specified by the one or more actions;
**characterised in that** the processor when executing the local recognition application performs the steps of:
upon determining (312) that the text segment does not correspond to at least one stored intent in the set of stored intents and the vehicle does not have a network connection with a remote service, automatically adding (316) the text segment to a queue for a specified period;
wherein the text segment specifies at least one action for a device external to the vehicle to perform.

10. The system of claim 9, wherein the one or more corresponding components (180) include at least one of an entertainment subsystem, a navigation subsystem, an advanced driver assistance system (ADAS), or a climate control subsystem.

11. The system of claim 9 or 10, wherein causing the one or more corresponding components to perform actions specified by the one or more actions comprises sending instructions to a component controller application, wherein the component controller application:
generates one or more commands based on the one or more actions, and
transmits the one or more commands via a controller area network (CAN) bus to the one or more corresponding components.

12. The system of claim 9, wherein the device external to the vehicle comprises one of a wearable device, a sensor device, an Internet of Things (IoT) device, or a remote computing device.

## Patentansprüche

1. Computerimplementiertes Verfahren (300), umfassend:
Empfangen (302) eines akustischen Sprachsignals, erzeugt von einem Benutzer (202);
Umwandeln (304) des akustischen Sprachsignals in ein Textsegment;
Vergleichen (306) des Textsegments mit einem Satz gespeicherter Absichten, wobei jede gespeicherte Absicht eine oder mehrere Aktionen definiert, die eine Komponente eines Fahrzeugs durchführen soll; und
beim Bestimmen (308), dass das Textsegment einer ersten Absicht in dem Satz gespeicherter Absichten entspricht:
Abrufen der einen oder der mehreren Aktionen, die der ersten Absicht zugeordnet sind; und
Veranlassen (308), dass eine oder mehrere entsprechende Komponenten (180) des Fahrzeugs Aktionen durchführen, die durch die eine oder die mehreren Aktionen definiert sind;
**dadurch gekennzeichnet, dass** das computerimplementierte Verfahren ferner Folgendes umfasst:
beim Bestimmen (312), dass das Textsegment nicht mindestens einer gespeicherten Absicht in dem Satz gespeicherter Absichten entspricht und das Fahrzeug keine Netzwerkverbindung mit einem entfernten Dienst hat, automatisches Hinzufügen (316) des Textsegments zu einer Warteschlange für einen definierten Zeitraum;
wobei das Textsegment mindestens eine Aktion definiert, die eine Vorrichtung außerhalb des Fahrzeugs durchführen soll.

2. Computerimplementiertes Verfahren nach Anspruch 1, ferner umfassend:
beim Bestimmen (312), dass das Fahrzeug die Netzwerkverbindung mit dem entfernten Dienst hergestellt hat, Übertragen (320) des Textsegments aus der Warteschlange an den entfernten Dienst.

3. Computerimplementiertes Verfahren (300) nach Anspruch 1, wobei der entfernte Dienst mindestens einen digitalen Backend-Assistenzdienst, eine ereignisgesteuerte Architektur oder eine Fahrzeugdienstplattform umfasst.

4. Computerimplementiertes Verfahren (300) nach Anspruch 1, ferner umfassend:
beim Bestimmen, dass das Textsegment nicht mindestens einer gespeicherten Absicht in dem Satz gespeicherter Absichten entspricht und das Fahrzeug keine Netzwerkverbindung mit einem entfernten Dienst hat: den Benutzer auffordern, das Textsegment zu einer Warteschlange hinzuzufügen; und
beim Empfangen einer Bestätigung von dem Benutzer, Speichern des Textsegments in der Warteschlange, oder
beim Empfangen einer Zurückweisung von dem Benutzer, Verwerfen des Textsegments.

5. Computerimplementiertes Verfahren (300) nach einem der Ansprüche 1-4, wobei das Veranlassen, dass eine oder mehrere entsprechende Komponenten des Fahrzeugs Aktionen durchführen, die durch die eine oder die mehreren Aktionen definiert sind, umfasst:
Erzeugen eines oder mehrerer Befehle auf der Grundlage der einen oder der mehreren Aktionen; und
Übertragen des einen oder der mehreren Befehle an die eine oder die mehreren entsprechenden Komponenten, wobei die eine oder die mehreren entsprechenden Komponenten die Aktionen durch Ausführen des einen oder der mehreren Befehle durchführen.

6. Computerimplementiertes Verfahren (300) nach einem der Ansprüche 1-5, ferner umfassend:
Empfangen eines zweiten Satzes von Absichten; und
Hinzufügen des zweiten Satzes von Absichten zu dem Satz gespeicherter Absichten, um einen aktualisierten Satz gespeicherter Absichten zu erzeugen.

7. Computerimplementiertes Verfahren (300) nach einem der Ansprüche 1-6, wobei jede Aktion der einen oder der mehreren Aktionen mindestens eines identifiziert aus:
einem Fahrzeugverhalten, das von einer Komponente des Fahrzeugs durchgeführt wird, oder
einer Änderung eines Anwendungsparameters, der von einer Komponente des Fahrzeugs ausgeführt wird.

8. Ein oder mehrere nichtflüchtige computerlesbare Speichermedien, die Anweisungen speichern, die beim Ausführen durch einen oder mehrere Prozessoren den einen oder die mehreren Prozessoren dazu veranlassen, das Verfahren nach einem der Ansprüche 1-7 durchzuführen.

9. System (100), umfassend:
einen Speicher (120), auf dem eine lokale Spracherkennungsanwendung gespeichert ist; und
einen Prozessor (140), der mit dem Speicher gekoppelt ist, der beim Ausführen der lokalen Spracherkennungsanwendung (132) die folgenden Schritte durchführt:
Empfangen (302) eines akustischen Sprachsignals, erzeugt von einem Benutzer (202);
Umwandeln (304) des akustischen Sprachsignals in ein Textsegment;
Vergleichen (306) des Textsegments mit einem Satz gespeicherter Absichten, wobei jede gespeicherte Absicht eine oder mehrere Aktionen definiert, die eine Komponente (180) eines Fahrzeugs durchführen soll; und
beim Bestimmen (308), dass das Textsegment einer ersten Absicht in dem Satz gespeicherter Absichten entspricht:
Abrufen der einen oder der mehreren Aktionen, die der ersten Absicht zugeordnet sind; und
Veranlassen, dass eine oder mehrere entsprechende Komponenten des Fahrzeugs Aktionen durchführen, die durch die eine oder die mehreren Aktionen definiert sind;
**dadurch gekennzeichnet, dass** der Prozessor beim Ausführen der lokalen Erkennungsanwendung die folgenden Schritte durchführt:
beim Bestimmen (312), dass das Textsegment nicht mindestens einer gespeicherten Absicht in dem Satz gespeicherter Absichten entspricht und das Fahrzeug keine Netzwerkverbindung mit einem entfernten Dienst hat, automatisches Hinzufügen (316) des Textsegments zu einer Warteschlange für einen definierten Zeitraum;
wobei das Textsegment mindestens eine Aktion definiert, die eine Vorrichtung außerhalb des Fahrzeugs durchführen soll.

10. System nach Anspruch 9, wobei die eine oder die mehreren entsprechenden Komponenten (180) mindestens eines von einem Unterhaltungsteilsystem, einem Navigationsteilsystem, einem fortschrittlichen Fahrerassistenzsystem (ADAS) oder einem Klimatisierungsteilsystem beinhalten.

11. System nach Anspruch 9 oder 10, wobei das Veranlassen der einen oder mehreren entsprechenden Komponenten zum Durchführen von Aktionen, die durch die eine oder die mehreren Aktionen definiert sind, ein Senden von Anweisungen an eine Komponentensteuerungsanwendung umfasst, wobei die Komponentensteuerungsanwendung:
einen oder mehrere Befehle auf der Grundlage der einen oder der mehreren Aktionen erzeugt, und
den einen oder die mehreren Befehle über einen Controller-Area-Network-(CAN-)Bus an die eine oder die mehreren entsprechenden Komponenten überträgt.

12. System nach Anspruch 9, wobei die Vorrichtung außerhalb des Fahrzeugs eines aus einer tragbaren Vorrichtung, einer Sensorvorrichtung, einer Internet-der-Dinge-(IoT-)Vorrichtung oder einer entfernten Rechenvorrichtung umfasst.

## Revendications

1. Procédé mis en œuvre par ordinateur (300) comprenant :
la réception (302) d'un signal sonore vocal généré par un utilisateur (202) ;
la conversion (304) du signal sonore vocal en un segment de texte ;
la comparaison (306) du segment de texte à un ensemble d'intentions stockées, dans lequel chaque intention stockée spécifie une ou plusieurs actions à effectuer par un composant d'un véhicule ; et
après avoir déterminé (308) que le segment de texte correspond à une première intention dans l'ensemble d'intentions stockées :
la récupération des une ou plusieurs actions associées à la première intention ; et
le fait d'amener (308) un ou plusieurs composants (180) correspondants du véhicule à effectuer des actions spécifiées par les une ou plusieurs actions ;
**caractérisé en ce que** le procédé mis en œuvre par ordinateur comprend également :
après avoir déterminé (312) que le segment de texte ne correspond pas à au moins une intention stockée dans l'ensemble d'intentions stockées et que le véhicule n'a pas de connexion réseau avec un service distant, l'ajout automatique (316) du segment de texte à une file d'attente pendant une période spécifiée ;
dans lequel le segment de texte spécifie au moins une action à effectuer par un dispositif externe au véhicule.

2. Procédé mis en œuvre par ordinateur selon la revendication 1, comprenant également :
après avoir déterminé (312) que le véhicule a établi la connexion réseau avec le service distant, la transmission (320) du segment de texte de la file d'attente au service distant.

3. Procédé mis en œuvre par ordinateur (300) selon la revendication 1, dans lequel le service distant comprend au moins l'un d'un service d'assistant numérique final, une architecture pilotée par événement ou une plate-forme de services de véhicule.

4. Procédé mis en œuvre par ordinateur (300) selon la revendication 1, comprenant également :
après avoir déterminé que le segment de texte ne correspond pas à au moins une intention de l'ensemble d'intentions stockées et que le véhicule n'a pas de connexion réseau avec un service distant : l'invite de l'utilisateur à ajouter le segment de texte à une file d'attente ; et
après réception d'une confirmation de l'utilisateur, le stockage du segment de texte dans la file d'attente, ou
après réception d'un rejet de l'utilisateur, le rejet du segment de texte.

5. Procédé mis en œuvre par ordinateur (300) selon l'une quelconque des revendications 1 à 4, dans lequel le fait d'amener un ou plusieurs composants correspondants du véhicule à effectuer des actions spécifiées par la ou les actions comprend :
la génération d'un ou plusieurs ordres en fonction des une ou plusieurs actions ; et
la transmission des un ou plusieurs ordres aux un ou plusieurs composants correspondants, dans lequel les un ou plusieurs composants correspondants effectuent les actions en exécutant les un ou plusieurs ordres.

6. Procédé mis en œuvre par ordinateur (300) selon l'une quelconque des revendications 1 à 5, comprenant également :
la réception d'un second ensemble d'intentions ; et
l'ajout du second ensemble d'intentions à l'ensemble d'intentions stockées pour générer un ensemble mis à jour d'intentions stockées.

7. Procédé mis en œuvre par ordinateur (300) selon l'une quelconque des revendications 1 à 6, dans lequel chaque action parmi les une ou plusieurs actions identifie au moins l'un de :
un comportement de véhicule effectué par un composant du véhicule, ou
une modification d'un paramètre d'application exécutée par un composant du véhicule.

8. Un ou plusieurs supports lisibles par ordinateur non transitoires stockant des instructions qui, lorsqu'elles sont exécutées par un ou plusieurs processeurs, amènent les un ou plusieurs processeurs à effectuer le procédé selon l'une quelconque des revendications 1 à 7.

9. Système (100) comprenant :
une mémoire (120) stockant une application de reconnaissance vocale locale ; et
un processeur (140) couplé à la mémoire qui, lors de l'exécution de l'application de reconnaissance vocale locale (132), exécute les étapes de :
réception (302) d'un signal sonore vocal généré par un utilisateur (202) ;
conversion (304) du signal sonore vocal en un segment de texte ; comparaison (306) du segment de texte à un ensemble d'intentions stockées, dans lequel chaque intention stockée spécifie une ou plusieurs actions à effectuer par un composant (180) d'un véhicule ; et
après avoir déterminé (308) que le segment de texte correspond à une première intention dans l'ensemble d'intentions stockées :
récupération des une ou plusieurs actions associées à la première intention ; et
le fait d'amener un ou plusieurs composants correspondants du véhicule à effectuer des actions spécifiées par les une ou plusieurs actions ;
**caractérisé en ce que** le processeur, lors de l'exécution de l'application de reconnaissance vocale locale effectue les étapes de :
après avoir déterminé (312) que le segment de texte ne correspond pas à au moins une intention stockée dans l'ensemble d'intentions stockées et que le véhicule n'a pas de connexion réseau avec un service distant, ajout automatique (316) du segment de texte à une file d'attente pendant une période spécifiée ;
dans lequel le segment de texte spécifie au moins une action à effectuer par un dispositif externe au véhicule.

10. Système selon la revendication 9, dans lequel les un ou plusieurs composants (180) correspondants comportent au moins l'un d'un sous-système de divertissement, d'un sous-système de navigation, d'un système avancé d'assistance au conducteur (ADAS) ou d'un sous-système de climatisation.

11. Système selon la revendication 9 ou 10, dans lequel le fait d'amener les un ou plusieurs composants correspondants à effectuer des actions spécifiées par les une ou plusieurs actions comprend l'envoi d'instructions à une application de dispositif de commande de composants, dans lequel l'application de dispositif de commande de composants :
génère un ou plusieurs ordres en fonction des une ou plusieurs actions ; et
transmet les un ou plusieurs ordres par l'intermédiaire d'un bus CAN (réseau local de dispositif de commande) aux un ou plusieurs composants correspondants.

12. Système selon la revendication 9, dans lequel le dispositif externe au véhicule comprend l'un d'un dispositif portable, d'un dispositif de capteur, d'un dispositif de l'Internet des objets (IoT) ou d'un dispositif informatique distant.
